# EUROPÄISCHE PATENTSCHRIFT

(11) **EP 1 568 143 B1**
(45) Veröffentlichungstag und Bekanntmachung des Hinweises auf die Patenterteilung: **13.09.2006**
(21) Anmeldenummer: 03779877.4
(22) Anmeldetag: 10.11.2003
(51) Int. Cl.: H04B 1/04

(54) **SENDESTUFE MIT PHASEN UND AMPLITUDENREGELSCHLEIFE**
TRANSMISSION STAGE COMPRISING PHASES AND AN AMPLITUDE REGULATING LOOP
ETAGE EMETTEUR COMPORTANT DES PHASES ET UNE BOUCLE DE REGLAGE D'AMPLITUDE

(30) Priorität: 14.11.2002 DE 10253181; 09.12.2002 DE 10257435
(43) Veröffentlichungstag der Anmeldung: 31.08.2005
(73) Patentinhaber: Fraunhofer-Gesellschaft zur Förderung der angewandten Forschung e.V., 80686 München (DE)
(72) Erfinder: JAFARI, Houman, 91052 Erlangen (DE); BURDENSKI, Ralf, 90411 Nürnberg (DE)
(74) Vertreter: Schoppe, Fritz
(86) Internationale Anmeldenummer: PCT/EP2003/012523
(87) Internationale Veröffentlichungsnummer: WO 2004/045093

(56) Entgegenhaltungen:
- EP-A- 1 211 801
- WO-A-02/33844
- WO-A-02/47249
- MANN S ET AL: "INCREASING THE TALK-TIME OF MOBILE RADIOS WITH EFFICIENT LINEAR TRANSMITTER ARCHITECTURES" ELECTRONICS AND COMMUNICATION ENGINEERING JOURNAL, INSTITUTION OF ELECTRICAL ENGINEERS, LONDON, GB, Bd. 13, Nr. 2, April 2001 (2001-04), Seiten 65-76, XP001058796 ISSN: 0954-0695

## Beschreibung

Die vorliegende Erfindung bezieht sich auf Sendestufen und insbesondere auf Sendestufen, die eine Amplitudenregelschleife und eine Phasenregelschleife umfassen, um ein Amplituden- und Phasen-moduliertes Signal über einen nichtlinearen Leistungsverstärker zu verstärken und ggf. über einen drahtlosen Übertragungskanal auszusenden.

Für mobile Kommunikationsdienste existiert nur eine begrenzte Anzahl an Frequenzbändern. Die erforderliche Kanalbandbreite bei der Datenübertragung und die mögliche Datenrate sind entscheidende Faktoren, welche die Effektivität eines Übertragungssystems charakterisieren. Dabei wird innerhalb eines Frequenzbandes eine maximale Datenrate angestrebt. Es existieren verschiedene Verfahren, die es gestatten, bei gleicher Kanalbandbreite eine höhere Datenrate zu erlauben und dadurch einen effizienteren Nachrichtenfluß zu ermöglichen.

In den letzten Jahren hat sich im Bereich der mobilen Kommunikation der GSM- (Global System for Mobile Communication) Standard etabliert. Dabei wird eine GMSK- (Gaussian Minimum Shift Keying) Modulation verwendet. Die GMSK zählt zu den sogenannten CPM- (Continuous Phase Modulation) Modulationsverfahren. Dabei handelt es sich um ein nichtlineares digitales Modulationsverfahren mit konstanter Amplitude und stetiger Phase.

Die Erhöhung des Nachrichtenflusses kann durch Änderung des Modulationsverfahrens erfolgen. Dabei wird anstatt einer GMSK-Modulation eine 3π/8-8PSK- (Phase Shift Keying) Modulation für den GSM-EDGE- (Enhancement Data Ratio for GSM Evaluation) Standard oder eine QPSK- (Quadrature Phase Shift Keying) Modulation für UMTS- (Universal Mobile Telecommunications System) Standard verwendet. Die 3π/8-8PSK-Modulation und die QPSK-Modulation enthalten neben der Phasenmodulation auch eine Amplitudenkomponente. Dadurch ist eine Übertragung von zusätzlichen Informationen zur Erhöhung der Datenrate bei der gleichen Kanalbandbreite möglich.

Ein kritischer Punkt in dem mobilen Endgerät ist das Übertragungsverhalten des HF-Sendeverstärkers in Bezug auf die zu übertragenden HF-Signale für den EDGE und UMTS-Standard. Im Gegensatz zur GMSK-Modulation werden bei der 3n/8-8PSK-Modulation und QPSK-Modulation die Phase und die Amplitude moduliert. Das Ergebnis ist eine spektrale Verbreiterung des Ausgangssignales nach dem nichtlinearen Leistungsverstärker bzw. eine deutliche Verzerrung des Sendesignals. Dies führt zu einer Erhöhung der Bitfehlerrate (BER) bei gleicher Empfangsfeldstärke.

Um diese Verzerrungen zu minimieren, wäre eigentlich der Einsatz eines linearen Leistungsverstärkers erforderlich. Der Wirkungsgrad linearer Verstärker ist aber mit ca. [35% deutlich schlechter im Vergleich zu nichtlinearen Leistungsverstärkern, welche einen Wirkungsgrad von über 50% bis 60% erreichen.

Die hohe Energieaufnahme des Systems durch den niedrigeren Wirkungsgrad der Komponenten steht im Gegensatz zu dem Bestreben, möglichst lange Betriebszeiten der mobilen Station zu erreichen.

Signal-Rekonstruktionstechniken wie Polar-Loop ermöglichen den Einsatz nichtlinearer Leistungsverstärker auch für den EDGE-Standard und UMTS-Standard.

Sogenannte Polar-Loop-Sendeschaltungen sind beispielsweise in dem U.S-Patent Nr. 4,481,672, der WO 02/47249 A2, dem U.S.-Patent Nr. 4, 630, 315 oder der GB 2368214 A beschrieben.

Auch die EP 1211801 A2 offenbart eine Polar-Loop-Sendeschaltung, die für zukünftige Mobilfunksysteme, welche eine Phasen- und Amplitudenmodulation aufweisen, geeignet ist und auch für bekannte Systeme nach dem GSM-Standard verwendet werden kann. Die Polar-Loop-Sendeschaltung umfaßt einen Leistungsverstärker, der eingangsseitig ein Signal von einem VCO empfängt. Das Steuersignal für den VCO wird durch Amplituden-Begrenzen des Sendesignals als Sollsignal und durch Amplituden-Begrenzen eines Ist-Signals, einen anschließenden Phasenvergleich der begrenzten Signale und eine nachfolgende Tiefpaßfilterung gewonnen.

Das Amplitudensteuersignal für den steuerbaren nichtlinearen Leistungsverstärker wird durch Gleichrichten des Sendesignals als Soll-Signal, Gleichrichten eines Ist-Signals, eine nachfolgende Differenzbildung mittels eines Differenzverstärkers und eine anschließende Tiefpaßfilterung erzeugt.

Das Ist-Signal für die Amplitudenregelung sowie für die Phasenregelung wird vom Ausgang des nichtlinearen Leistungsverstärkers abgezweigt, einem programmierbaren Verstärker zugeführt, dann auf eine Zwischenfrequenz heruntergemischt, einem rampenartig steuerbaren Verstärker zugeführt und dann einerseits in den Gleichrichter zur Amplitudenregelung und andererseits in den Begrenzer zur Phasenregelung eingespeist.

Am Steueranschluß des programmierbaren Verstärkers, in den ein vom Ausgang abgezweigtes Rückkopplungssignal zunächst eingespeist wird, kann mit einem Steuersignal der Leistungspegel am Ausgang der Polar-Loop-Sendeschaltung geregelt werden. Hierbei ist der programmierbare Verstärker ein linearer Verstärker, der das an seinem Eingang zuführbare Signal linear dämpft. Die Spannung des an seinem Ausgang bereitgestellten Hochfrequenz-Signals hingegen hängt nicht linear von einem an dem Steueranschluß zuführbaren Stellsignal ab und beträgt z. B. 2 dB pro Least-Significant-Bit-Änderung des Stellsignals.

Typische Polar-Loop-Sendeschaltungen, wie sie in der EP 1211801 A2 offenbart sind, eignen sich für zellulare Funktelefone gemäß dem GSM-Standard sowie für alternative Modulationsverfahren, bei denen eine Phasen- und eine Amplitudenmodulation stattzufinden hat.

Solche zellularen Mobilfunksysteme haben als weitere Komponente eine automatische Verstärkungsregelung dahin gehend, daß in der Basisstation und/oder im Mobilteil eine Feldstärkemessung durchgeführt wird, um dann, wenn aufgrund einer geringen Empfangsfeldstärke festgestellt wird, daß der gerade herrschende Obertragungskanal nicht zufriedenstellend ist, die Sendeleistung des Mobiltelefons und/oder der Basisstation hochzuregeln. Nachdem der Stromverbrauch lediglich für die Mobilteile kritisch ist, wird oftmals lediglich eine Sendeleistungsregelung im Mobilteil vorgenommen.

So ist es einerseits im Interesse einer geringen Bitfehlerrate wünschenswert, eine sehr hohe Sendeleistung zu verwenden, da damit automatisch das Signal/Rausch-Verhältnis am Empfänger und damit die Bitfehlerrate fällt. Andererseits ist eine hohe Sendeleistung aufgrund der zunehmenden Widerstände aus der Bevölkerung unerwünscht. Des weiteren führt eine hohe Sendeleistung dazu, daß die Zellen nur relativ grobmaschig ausgelegt werden können bzw., daß eine Trägerfrequenz nicht möglichst oft in einem Zellenraster "wiederverwendet" werden können, um eine hohe Teilnehmerzahl in dem begrenzten Frequenzband zu erlauben.

Eine hohe Sendeleistung hat insbesondere bei der Verwendung von nichtlinearen Verstärkern das Problem, daß Nebenkanalstörungen zunehmen können, d. h., daß ein Sender, der eigentlich für eine Trägerfrequenz spezifiziert ist, in einen Nebenkanal, in dem er eigentlich nichts oder nur unterhalb einer Schwelle senden dürfte, aufgrund seiner Nichtlinearität ebenfalls Leistung aussendet. Ein solches Sendegerät ist dann nicht vorschriftsmäßig, wenn die sogenannte Nebenkanalaussendung oberhalb einer bestimmten Spezifikation liegt. So ist beispielsweise für den erwähnten EDGE-Standard gefordert, daß das Spektrum des Ausgangssignals des Funkgeräts bei einer Ablagefrequenz von +/- 200 kHz bezüglich einer Trägerfrequenz kleiner als -54 dBc ist, und ferner bei einer Ablagefrequenz von +/-300 kHz bezüglich des Trägers unter -60 dBc liegt.

Für den UMTS-Standard wird gefordert, daß das Spektrum des Ausgangssignals im gesamten Nachbarkanal besser als -45 dBc ist.

Alle diese Anforderungen sprechen dafür, daß die Sendeleistung des Mobiltelefons so gering als möglich sein muß, d. h. so klein, daß eine geforderte untere Bitfehlerrate gerade noch erfüllt wird.

Darüber hinaus existiert für Handys im speziellen die Anforderung, daß sie preisgünstig sein müssen, da der Handy-Markt sich zu einem außerordentlich wettbewerbsintensiven Markt entwickelt hat, in dem bereits kleine Preisvorteile dazu geführt haben, daß das eine System überlebensfähig war, also vom Markt akzeptiert worden ist, während das andere System sich auf dem Markt nicht durchgesetzt hatte.

Für Mobiltelefone wird daher eine möglichst empfindliche Sendeleistungsregelung eingesetzt, die im Falle eines guten Übertragungskanals die Sendeleistung sehr schnell und so weit als möglich reduziert, die jedoch auch in der Lage ist, im Falle eines meist nur vorübergehend schlechten Kanals die Sendeleistung sehr schnell und insbesondere sehr stark hochzufahren. Eine Polar-Loop-Sendeschaltung muß daher einerseits in einem sehr hohen Dynamikbereich des Leistungsverstärkers arbeiten und andererseits einen sehr hohen Dynamikbereich hinsichtlich der Amplitudenregelschleife und der Phasenregelschleife, die zusammen die Polar-Loop bilden, verkraften.

Nachteile an dem in der EP 1211801 A2 offenbarten Konzept besteht darin, daß die Einstellung der Ausgangsleistung über die Programmierung des programmierbaren Verstärkers im Rückkopplungszweig erfolgt. Der programmierbare und der nachgeschaltete rampenartig betreibbare Verstärker müssen daher ein Ausgangssignal mit einer hohen Dynamik liefern, das in einem Fall, nämlich bei maximaler Ausgangssendeleistung sehr klein ist, und das im anderen Fall, nämlich bei minimaler Ausgangsleistung, sehr groß ist und hierbei insbesondere in die Nähe der Amplitude des Ausgangssignals vom Sendesignalgenerator kommt.

Es wurde herausgefunden, daß ein Signal mit zu großer Dynamik im Rückkopplungspfad dazu führt, daß der Gleichrichterdetektor zur Ermittlung des Amplituden-Ist-Signals sehr aufwendig und teuer ausgeführt werden muß. Noch gravierender ist die Tatsache, daß der Amplituden-Begrenzer (Limiter), der zur Erzeugung des Phasen-Ist-Signals benötigt wird, ebenfalls sehr teuer ausgeführt sein muß, da er, wenn das Eingangssignal in denselben sehr klein wird, eine außerordentlich hohe Verstärkung benötigt, um noch eine Amplitudenbegrenzung zu erreichen, um ein Phasen-Ist-Signal zu liefern. Dies muß jedoch auf jeden Fall sichergestellt werden, da in dem Moment, in dem der Amplitudenbegrenzer zur Erzeugung des Phasen-Ist-Signals kein definiertes Ausgangssignal mehr liefert, die Phasenregelschleife der Polar-Loop ausrastet, was zu einem Totalverlust der Datenübertragung führt. In anderen Worten gesprochen, führt ein Ausfall der Phasenregelschleife der Polar-Loop dazu, daß die Nachrichtenverbindung sofort unterbrochen wird, und daß bis zu einer Neusynchronisation gewartet werden muß, was, wie es unschwer zu erkennen ist, lästig und nicht tolerabel ist.

Die WO 02/47249 A2 offenbart eine Polar-Loop-Verstärkeranordnung mit einem steuerbaren Verstärker, der ein Verstärkungssteuerungssignal erhält, das von einem Differenzverstärker erzeugt wird, wobei das Ausgangssignal des Differenzverstärkers, das ein Gleichsignal ist, durch einen Gleichsignalverstärker mit variabler Verstärkung verstärkt wird, um dann nach einer Linearisierung durch einen Linearisierer dem steuerbaren Verstärker als Steuerungssignal zugeführt zu werden. Das Sollsignal wird aus einem I-Signal und einem Q-Signal abgeleitet, wobei das Sollsignal vor der Einspeisung in den Differenzverstärker einer Leistungsdetektion mit einem Synchronleistungsdetektor unterzogen wird, der aus einem Mischer und einem Begrenzer besteht. Das Ist-Signal wird vom Ausgangssignal des Verstärkers abgeleitet, indem ein Teil des Ausgangssignals gedämpft wird, heruntergemischt wird und einem Verstärker mit variabler Verstärkung zugeführt wird, welcher ausgangsseitig eine Mischer/Begrenzer-Gruppe treibt, um eine Synchronleistungsdetektion des Ist-Signals durchzuführen, um das Detektionssignal dem Differenzverstärker zuzuführen. Die Leistung, die in jedem Sendeburst verwendet wird, hängt von der Sendeleistung ab. Wenn die Ausgangsleistung 0 dBm ist, wird keine Einstellung der Verstärker mit variabler Verstärkung durchgeführt werden. Wenn jedoch die Ausgangsleistung 27 dBm ist, werden die Verstärker mit variabler Verstärkung von 0 dBm auf 27 dBm rampenartig hochgefahren und am Ende des Bursts rampenartig heruntergefahren.

Die WO 02/33844 A2 offenbart ein Kommunikationssystem mit einer Amplitudenregelschleife, bei der ein abzustrahlendes Signal abgezweigt wird und gedämpft wird, um dann die Leistung des gedämpften Signals zu erfassen. Ferner wird eine Leistungsmessung eines Signals vom Generator-Signal durchgeführt, das nach Beaufschlagung mit einem Referenzpegel einer Pegelsteuerung unterzogen wird, die von einem angeforderten nominellen Leistungspegel abhängt. Eine Differenz zwischen dem Ausgangssignal der Pegelsteuerung und dem Leistungserfassungssignal wird einer Leistungssteuerung zugeführt, um Funkschaltungen, die eine Antenne speisen, entsprechend anzusteuern.

Die Aufgabe der vorliegenden Erfindung besteht darin, ein verbessertes Sendekonzept zu schaffen, das sicher und zuverlässig arbeitet, und bei dem gleichzeitig Anforderungen an bestimmte Elemente reduziert sind, so daß ein Sender preisgünstiger hergestellt werden kann.

Diese Aufgabe wird durch eine Sendestufe nach Patentanspruch 1 oder ein Verfahren nach Patentanspruch 18 gelöst.

Der vorliegenden Erfindung liegt die Erkenntnis zugrunde, daß die Sendeleistungsregelung nicht derart durchgeführt werden darf, daß die Phasenregelschleife einer Polar-Loop-Schaltung zu stark beeinträchtigt wird. Statt dessen wird erfindungsgemäß das Ist-Signal, von dem das Phasen-Ist-Signal abgeleitet wird, in einem begrenzten Bereich gehalten, der vorzugsweise relativ klein ist, derart, daß das Ist-Signal, von dem das Phasen-Ist-Signal abgeleitet wird, unabhängig von einer Ausgangsleistung des Verstärkers im wesentlichen konstant ist. Die Verstärkungsregelung wird statt dessen dadurch erreicht, daß entweder das Ist-Signal, das zur Amplitudenregelung verwendet wird, oder vorzugsweise das Soll-Signal, das zur Amplitudenregelung verwendet wird, entsprechend modifiziert werden, um am Ausgang des Leistungsverstärkers ein Signal mit höheren Leistungspegel oder ein Signal mit niedrigerem Leistungspegel zu erhalten. In anderen Worten bedeutet dies, daß in einer erfindungsgemäßen Polar-Loop-Schaltung im Rückkopplungspfad ein steuerbarer Verstärker vorgesehen ist, der derart betrieben wird, daß sein Ausgangssignal in einem vorbestimmten Bereich liegt, und vorzugsweise im wesentlichen konstant ist, während die Amplitudenregelungseinrichtung, die Teil der Amplitudenregelschleife der erfindungsgemäßen Polar-Loop-Schaltung bildet, ausgebildet ist, um entweder das Ist-Signal in die Amplitudenregelungseinrichtung und/oder das Soll-Signal in die Amplitudenregelungseinrichtung entsprechend zu variieren, damit ausgangsseitig, also am Signalausgang des Leistungsverstärkers ein Signal mit entsprechend variiertem Leistungspegel vorliegt.

Ein Vorteil der vorliegenden Erfindung besteht darin, daß das Ist-Signal, das in die Phasenregelungseinrichtung eingespeist wird, in einem wohl definierten Dynamikbereich liegt, der vorzugsweise sehr klein ist und bei einem besonders bevorzugtem Ausführungsbeispiel zu einem im wesentlichen konstanten Wert degeneriert. Damit wird sichergestellt, daß die Phasenregelschleife bei einer starken Pegeländerung nicht ausrastet, sondern ohne weiteres weiterarbeitet, um die Phaseninformationen im zu sendenden Signal dem vom Leistungsverstärker ausgegebenen verstärkten Signal aufzuprägen.

Ein weiterer Vorteil der vorliegenden Erfindung besteht darin, daß die Sicherheitsanforderungen nach einer zuverlässigen Funktionalität der Phasenregelschleife dadurch einfach erfüllt werden können, daß Teile der Phasenregelungseinrichtung, und insbesondere ein Amplitudenbegrenzer zur Erzeugung des Phasen-Ist-Signals aus dem Ist-Signal einfach ausgelegt werden kann. Nachdem das Eingangssignal in den Begrenzer vor dem Phasen/Frequenz-Detektor in einem wohl definierten nicht stark variierenden Dynamikbereich liegt, kann hier ein preisgünstiger Begrenzer vorgesehen werden, der zu einer Reduzierung der Gesamtkosten der Polar-Loop-Sendeschaltung führt, wobei diese Reduzierung der Gesamtkosten zu keinerlei Qualitätsminderungen führt, sondern insgesamt zu einer Zuverlässigkeitserhöhung des Konzepts führt.

Ein weiterer Vorteil der vorliegenden Erfindung besteht darin, daß zur Leistungsvariation lediglich ein weiterer steuerbarer Verstärker entweder zum Verstärken des Ist-Signals oder zum Verstärken des Soll-Signals vorgesehen werden muß, wobei die Anforderungen an diesen Verstärker ebenfalls nicht schlimm sind. Wird ein Verstärker zum Verstärken des Ist-Signals in die Amplitudenregelungseinrichtung vorgesehen, so ist der Eingangsdynamikbereich in diesen Verstärker wohl bekannt, da er ja in einem vorbestimmten Bereich liegt und vorzugsweise sogar konstant ist. Es kann also ein genau für diesen Zweck entwickelter Verstärker verwendet werden, der nicht hinsichtlich seiner Dynamik und insbesondere hinsichtlich eines stark variierenden Eingangssignals entworfen zu werden braucht. Darüber hinaus muß dieser Verstärker lediglich ein NF-Verstärker sein, wenn die erfindungsgemäße Polar-Loop-Schaltung einen Mischer im Rückkopplungszweig umfaßt, um das Rückkopplungssignal mit einer Sendefrequenz f₂ auf eine leicht beherrschbare ZF-Frequenz f₁ umzusetzen, für die ein Verstärkerentwurf ohne weiteres durchführbar ist.

Wird dagegen, wie es bei einem bevorzugtem Ausführungsbeispiel der vorliegenden Erfindung der Fall ist, eine Leistungsregelung der Ausgangsleistung des Leistungsverstärkers bei einer entsprechenden Anforderung einer Feldstärkemeßeinrichtung anhand des Soll-Signals in die Amplitudenregelungseinrichtung vorgenommen, so muß überhaupt kein Eingriff in eine Regelschleife selber vorgenommen werden. Statt dessen kann ohne weiteres das Soll-Signal von der Sendeeinrichtung, dessen Amplitudenverhältnisse und mittlere Leistungspegel bekannt bzw. beliebig konditionierbar sind, modifiziert werden, so daß für den einen bzw. die zwei weiteren Verstärker, die "im Konzert" mit dem Verstärker im Rückkopplungszweig arbeiten, keine erheblichen Kosten zu erwarten sind.

Bevorzugte Ausführungsbeispiele der vorliegenden Erfindung werden nachfolgend Bezug nehmend auf die beiliegenden Zeichnungen detailliert erläutert. Es zeigen:
- Fig. 1: ein Blockschaltbild einer erfindungsgemäßen Sendestufe;
- Fig. 2: ein Blockschaltbild der erfindungsgemäßen Sendestufe gemäß einem bevorzugten Ausführungsbeispiel;
- Fig. 3: eine tabellarische Übersicht der Ansteuerung der verschiedenen vorzugsweise verwendbaren Verstärker in der Amplitudenregelungseinrichtung;
- Fig. 4a: eine gleichungsmäßige Darstellung der Abhängigkeiten der Verstärkersteuerungssignale für eine bestimmte Verstärkung im Vorwärtszweig für eine Soll-Signal-Modifikation;
- Fig. 4b: eine beispielhafte Darstellung der gleichungsmäßigen Zusammenhänge für eine bestimmte Verstärkung V im Vorwärtszweig für eine Ist-Signal-Modifikation;
- Fig. 5a: eine Gegenüberstellung eines EDGE-Spektrums und eines Polar-Loop-Spektrums vor einer Optimierung der Polar-Loop; und
- Fig. 5b: eine Gegenüberstellung des EDGE-Spektrums und des Polar-Loop-Spektrums nach einer Optimierung der Polar-Loop unter Verwendung der Verstärkung des Differenzverstärkers in der Amplitudenregelungseinrichtung.

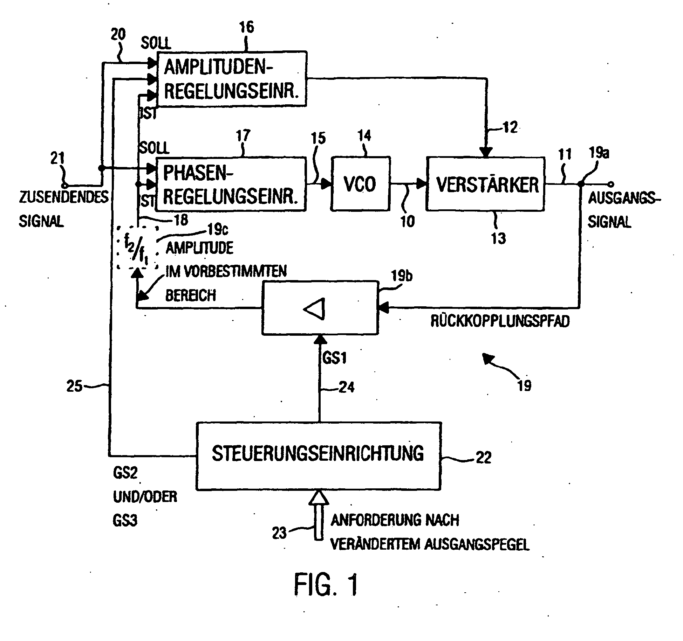

Fig. 1 zeigt ein Blockschaltbild einer erfindungsgemäßen Sendestufe zum Liefern eines Eingangssignals in einen Verstärkereingang, der in Fig. 1 mit 10 bezeichnet ist. Der Verstärker umfaßt ferner einen Verstärkerausgang 11 sowie einen Steuereingang 12. Der Verstärker selbst ist in Fig. 1 mit 13 bezeichnet.

Der Verstärker ist vorzugsweise ein Verstärker, der im nichtlinearen Betrieb arbeitet. Ist der Verstärker ein Bipolartransistor, so wird die Verstärkungssteuerung über die Versorgungsspannung betrieben. Das Verstärkungssteuerungssignal, das an dem Verstärkungssteuerungseingang 12 anliegt, wird in diesem Fall eine Versorgungsspannungsvariation bewirken. Ist der Verstärker dagegen ein Feldeffekttransistor-Verstärker, so wird es bevorzugt, die Verstärkung des Verstärkers über den Arbeitspunkt desselben zu steuern. Der Steuereingang 12 ist daher wirksam, um eine Drain-Source-Spannung oder eine Gate-Source-Spannung oder beide im Kennlinienfeld dem Beispiel gemäß entsprechend der Tabellen oder auch rückkopplungsmäßig zu variieren.

Die Sendestufe umfaßt einen steuerbaren Oszillator 14, der in Fig. 1 mit VCO bezeichnet ist. Vorzugsweise werden spannungsgesteuerte Oszillatoren bevorzugt. Alternativ können natürlich auch beispielsweise stromgesteuerte Oszillatoren verwendet werden. Im Falle von stromgesteuerten Oszillatoren ist das Steuersignal, das an einem Steuereingang 15 in den Oszillator 14 eingespeist wird, ein Strom, während, wenn der VCO 14 spannungsgesteuert ist, das Steuersignal in den Steuereingang 15 des VCO 14 eine Spannung ist.

Wie es für Polar-Loop-Schaltungen üblich ist, ist ferner eine Amplitudenregelungseinrichtung 16 sowie eine Phasenregelungseinrichtung 17 vorgesehen. Während die Phasenregelungseinrichtung 17 mit dem Steuereingang 15 des steuerbaren Oszillators 14 ausgangsseitig gekoppelt ist, ist die Amplitudenregelungseinrichtung 16 mit dem Verstärkungssteuerungseingang 12 des Verstärkers 13 ausgangsseitig gekoppelt. Sowohl die Phasenregelungseinrichtung 17 als auch die Amplitudenregelungseinrichtung 16 erhalten ein Ist-Signal 18, das am Ausgang eines Rückkopplungspfades 19 anliegt. Der Rückkopplungspfad 19 umfaßt eine Abzweigungseinrichtung 19a, über die ein Teil des Ausgangssignals am Verstärkerausgang 11 abgezweigt wird. Für HF-Anwendungen, also wenn das Ausgangssignal des Verstärkers 11 eine Frequenz im HF-Bereich hat, kann hierbei ein entsprechend gearteter Richtkoppler z. B. in Streifenleitungstechnik verwendet werden.

Der Rückkopplungspfad 19 umfaßt ferner einen variablen Rückkopplungspfad-Verstärker 19b, der über einen Steuerungseingang steuerbar ist, und zwar unter Verwendung eines Verstärkungssteuerungssignals GS1. Am Ausgang des Rückkopplungspfad-Verstärkers 19b liegt ein verstärktes Rückkopplungssignal vor, das eine Amplitude in einem vorbestimmten Bereich ist, wie es nachfolgend ausgeführt wird. Optional ist im Rückkopplungspfad 19 ferner eine Frequenzumsetzungseinrichtung 19c vorgesehen, um die Phasenregelungseinrichtung 17 bzw. die Amplitudenregelungseinrichtung 16 in einem Zwischenfrequenzbereich zu betreiben. In diesem Fall wird die Frequenz des Ausgangssignals des Verstärkers 19b, die beispielsweise f₂ ist, auf eine niedrigere Zwischenfrequenz f₁ umgesetzt. Hierzu kann eine normale Mischer/Lokaloszillator-Kombination in dem Block 19c zum Einsatz kommen.

Unabhängig davon, ob im Rückkopplungspfad 19 die Frequenzumsetzungseinrichtung 19c vorhanden ist oder nicht, liegt an einem Ausgang des Rückkopplungspfads 19, also signalflußmäßig hinter dem Rückkopplungspfad-Verstärker 19b, das Ist-Signal an, das in die Phasenregelungseinrichtung 17 einerseits und in die Amplitudenregelungseinrichtung 16 andererseits eingespeist wird. Wie es nachfolgend ausgeführt werden wird, wird das Ist-Signal in der Phasenregelungseinrichtung in ein Ist-Phasensignal verarbeitet. Analog hierzu wird das Ist-Signal 18 in der Amplitudenregelungseinrichtung 16 in ein Ist-Amplitudensignal verarbeitet.

Sowohl die Amplitudenregelungseinrichtung 16 als auch die Phasenregelungseinrichtung 17 erhalten ferner ein Soll-Signal 20, das an einem Signaleingang 21 anliegt, der zum Erhalten eines zu sendenden. Signals vorgesehen ist. Das Soll-Signal 20 wird in der Phasenregelungseinrichtung 17 verarbeitet, um ein Soll-Phasensignal zu erhalten. Entsprechend wird das Soll-Signal 20 in der Amplitudenregelungseinrichtung 16 verarbeitet, um ein Soll-Amplitudensignal zu erhalten.

Wie es in der Technik bekannt ist, arbeiten sowohl die Amplitudenregelungseinrichtung 16 als auch die Phasenregelungseinrichtung 17 dahingehend, daß in Verbindung mit dem VCO 14 bzw. dem Verstärker 13 die Differenz zwischen dem Soll-Signal 20 und dem Ist-Signal 18 kleiner wird bzw. im Idealfall zu Null wird. In diesem Fall prägt der VCO 14 dem Ausgangssignal am Ausgang des Verstärkers 11 den Phasenverlauf des zu sendenden Signals am Eingang 21 auf. Analog hierzu prägt der Verstärker 13 dem Ausgangssignal am Verstärkerausgang 11 den Amplitudenverlauf des zu sendenden Signals 21 auf, jedoch einerseits mit einer anderen Frequenz, nämlich der HF-Sendefrequenz, und darüber hinaus mit einer wesentlichen höheren Amplitude, nämlich der HF-Sendeamplitude, die typischerweise um vieles höher ist als die Amplitude des an dem Eingang 21 anliegenden zu sendenden Signals.

Die erfindungsgemäße Sendestufe umfaßt ferner eine Steuerungseinrichtung 22, die ausgebildet ist, um, wenn sie über einen Anforderungseingang 23 eine Anforderung nach einem veränderten Ausgangspegel erhält, sowohl den Rückkopplungspfad-Verstärker 19b über einen Rückkopplungspfad-Verstärker-Steuerausgang 24 ansteuert, und gleichzeitig die Amplitudenregelungseinrichtung 16 über einen Amplitudenregelungseinrichtungseingang 25 ansteuert. Hierzu wird einerseits über den Eingang 24 das Verstärkungs-Steuerungssignal GS1 ausgegeben. Andererseits wird über den Ausgang 25 ein Verstärkungssteuerungssignal GS2 und/oder ein Verstärkungssteuerungssignal GS3 in die Amplitudenregelungseinrichtung 16 eingespeist.

Die Differenz zwischen dem Soll-Signal 20 und dem Ist-Signal 18 in der Amplituden-Regelungseinrichtung 16 ist letztendlich dafür verantwortlich, wie groß das "Fehlersignal" am Ausgang der Amplitudenregelungseinrichtung 16 ist, das dem Verstärker über dem Steuerungseingang 12 zugeführt wird. Erfindungsgemäß wird die Differenz zwischen dem Soll-Signal 20 und dem Ist-Signal 18 innerhalb der Amplituden-Regelungseinrichtung 16 je nach einem von dem Anforderungseingang 23 erhaltenen Wert variiert, so daß die Phasenregelungseinrichtung 17 von dieser veränderten Anforderung anhand ihres Soll-Signals 20 und ihres Ist-Signals 18 gewissermaßen nichts "merkt". Die Phasenregelungseinrichtung 17 arbeitet somit unbeeindruckt von einer Anforderung nach einem veränderten Ausgangspegel und kann immer ein korrektes Verhalten zeigen, dahingehend, daß sie nicht über ihre Grenze hinaus "bemüht" wird und gegebenenfalls ausrastet. Ein Ausrasten der Phasenregelschleife, die durch die Phasenregelungseinrichtung 17, den VCO 14 und dem Rückkopplungspfad 19 gebildet wird, würde unweigerlich zu einem Kommunikations-Zusammenbruch zwischen einem Sender und einem Empfänger führen.

Damit dies nicht passiert, ist die Steuerungseinrichtung 22 ausgebildet, um einen mittleren Leistungspegel eines Signals an dem Signalausgang 11 des Verstärkers 13 zu steuern, indem abhängig von einer Anforderung 23 nach einer Veränderung des mittleren Leistungspegels die Amplitudenregelungseinrichtung 16 angesteuert wird, um das Ist-Signal 18 und/oder das Soll-Signal 20 innerhalb der Amplituden-Regelungseinrichtung 16 und gleichzeitig eine Verstärkung (GS1) des Rückkopplungspfad-Verstärkers 19b so zu variieren, daß die Amplitude des Ausgangssignals des Verstärkers 19b, also die Amplitude des Signals in dem Rückkopplungspfad 19 signalflußmäßig hinter dem Rückkopplungspfad-Verstärker 19b in einem vorbestimmten Bereich bleibt. Es sei darauf hingewiesen, daß das Ausgangssignal des Verstärkers 19b, wenn keine Frequenzumsetzungseinrichtung vorhanden ist, unmittelbar gleich dem Ist-Signal 18 ist, während in dem Fall, in dem eine Frequenzumsetzung 19c vorhanden ist, das Ist-Signal 18 von dem Ausgangssignal des Verstärkers 19b abgeleitet ist.

Lautet die Anforderung am Anforderungseingang 23 dahingehend, daß das Ausgangssignal am Signalausgang 11 des Verstärkers einen größeren mittleren Leistungspegel erhalten soll, so wird der Verstärker 19b das von der Abzweigunseinrichtung 19a abgezweigte Signal weniger verstärken, damit am Ausgang des Verstärkers 19b die Amplitude wieder im vorbestimmten Bereich liegt, der vorzugsweise zu einem konstanten Wert bzw. zu einem sehr kleinen Bereich innerhalb üblicher Signalschwankungen "degeneriert". Um tatsächlich die Verstärkungserhöhung am Signalausgang 11 des Verstärkers 13 zu erhalten, wird die Steuerungseinrichtung 22 über den Ausgang 25 die Amplitudenregelungseinrichtung 16 derart ansteuern, daß das Differenzsignal am Ausgang der Amplituden-Regelungseinrichtung größer wird, wobei für Fachleute offensichtlich ist, daß die Richtung, also hin zu negativer oder positiver Richtung, davon abhängt, wie die Kennlinie des Verstärkers 13 gestaltet ist, also der Zusammenhang zwischen Verstärkungssteuerungssignal und tatsächlicher Verstärkung V des Verstärkers 13.

Die Differenz am Ausgang der Amplitudenregelungseinrichtung 16 kann dadurch größer gemacht werden, daß z. B. das Soll-Signal 20 innerhalb der Amplituden-Regelungseinrichtung 16 im Vergleich zum Ist-Signal 18 vergrößert wird, oder daß das Ist-Signal 18 innerhalb der Amplitudenregelungseinrichtung 16 im Vergleich zum Soll-Signal 20 verkleinert wird, oder daß sowohl das Soll-Signal vergrößert wird als auch das Ist-Signal verkleinert wird.

Lautet dagegen die Anforderung an dem Eingang 23 in die Steuerungseinrichtung 22 dahingehend, daß der Signalpegel am Ausgang des Verstärkers 13 verringert werden soll, was beispielsweise der Fall ist, wenn z. B. ein Handy eine gute Verbindung mit einer Basisstation feststellt, so wird der Verstärker 19b im Rückkopplungspfad 19 angesteuert, um seine Verstärkung zu erhöhen, während die Amplitudenregelungseinrichtung 16 über den Ausgang 25 der Steuerungseinrichtung 22 angesteuert wird, um das Fehlersignal am Ausgang zu verringern. Dies kann entweder geschehen, wenn das Soll-Signal 20 im Vergleich zum Ist-Signal verkleinert wird, wenn das Ist-Signal 18 im Vergleich zum Soll-Signal 20 vergrößert wird, oder wenn beide Signale in Analogie zum vorherigen Fall gegenläufig verändert werden.

An dieser Stelle sei darauf hingewiesen, daß die Verstärkungseinrichtungen in Form des Verstärkers 19b im Rückkopplungspfad 19 sowie nachfolgend dargelegte Verstärkungseinrichtungen innerhalb der Amplituden-Regelungseinrichtung 16 genauso gut als Dämpfungsglieder ausgelegt sein können, wobei in diesem Fall eine negative Verstärkung einer Dämpfung entspricht. Lediglich aufgrund der Übersichtlichkeit der Darstellung wird im nachfolgenden von Verstärkung gesprochen, wobei Verstärkungen auch negative Verstärkungen, also Dämpfungen umfassen.

Darüber hinaus sei darauf hingewiesen, daß die in Fig. 1. gezeigten Ausgangssignale der dargestellten Blöcke mit den in Fig. 1 gezeigten nachfolgenden Blöcken "wirksam gekoppelt" sind, was bedeuten soll, daß nicht tatsächlich eine physische Komponente, wie z. B. der Ausgang des VCO 14 unmittelbar mit einem Transistoreingang innerhalb des Verstärkers 13 gekoppelt ist, ohne daß dazwischen irgendwelche weiteren Schaltungen wären. "Wirksam gekoppelt" bedeutet stattdessen, daß z. B. zwischen dem VCO-Ausgang und dem Verstärkereingang z. B. eine Anpassungsschaltung in Form einer Impedanztransformationsschaltung vorgesehen sein kann, die zwar am Informationsgehalt des übertragenen Signals nichts ändert, die jedoch sehr wohl z. B. die Eingangsimpedanz des Verstärkers 13 verändert, die der VCO 14 "sieht". Genauso können an den Ausgängen der Einrichtungen 16 und 17 noch Verstärker, Invertierer oder sonstige Signalverarbeitungsschaltungen vorgesehen sein, die Signalmodifikationen bewirken, die jedoch nichts daran ändern, daß beispielsweise der Ausgang der Amplitudenregelungseinrichtung 16 mit dem Verstärkungssteuerungseingang 12 des Verstärkers 13 wirksam gekoppelt" ist.

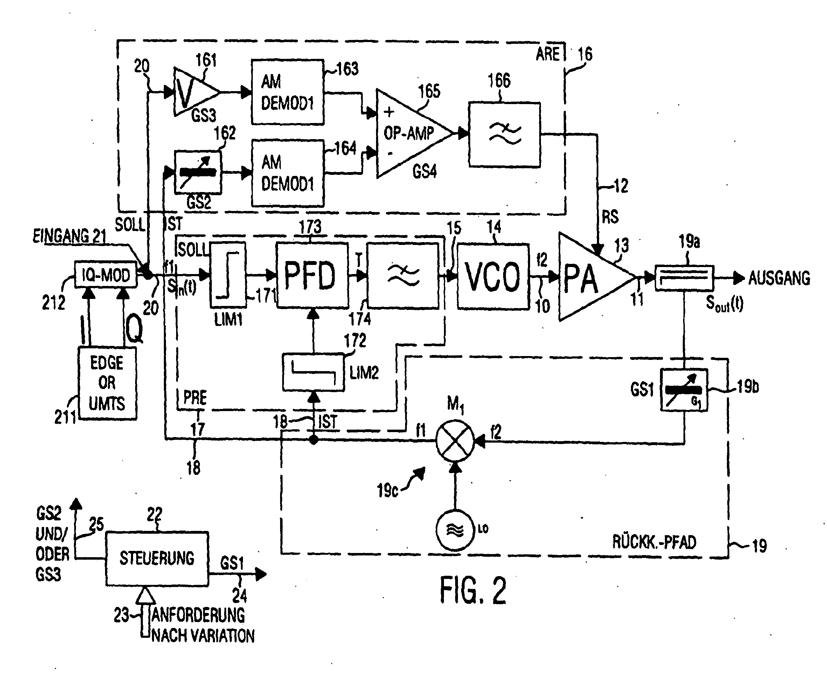

Nachfolgend wird anhand von Fig. 2 ein bevorzugtes Ausführungsbeispiel der vorliegenden Erfindung näher beschrieben. Die Phasenregelungseinrichtung 17 umfaßt einen ersten Begrenzer 171 zum Begrenzen des Soll-Signals 20, das in Fig.

Fig. 2 mit Sᵢₙ (t) bezeichnet ist. Ferner ist eine zweite Begrenzereinrichtung 172 vorgesehen, die ausgebildet ist, um das Ist-Signal 18 zu begrenzen. Am Ausgang der Einrichtung 71 liegt somit ein Soll-Phasensignal vor, während am Ausgang der Einrichtung 172 ein Ist-Phasensignal anliegt. Diese beiden Signale werden in einen Phasen/Frequenz-Detektor 173 eingespeist, der die aktuelle Phasendifferenz zu einem bestimmten Zeitpunkt t in ein Tiefpaßfilter, das in der Technik auch als Schleifenfilter bezeichnet wird und in Fig. 2 mit 174 bezeichnet ist, einspeist. Ein durch das Tiefpaßfilter 174 gefiltertes Phasendifferenzsignal stellt dann das Steuersignal in den VCO 14 dar.

Die Amplitudenregelungseinrichtung 16 umfaßt bei dem in Fig. 2 gezeigten Ausführungsbeispiel einen Soll-SignalVerstärker 161 mit variabler Verstärkung, wobei das Verstärkungssteuerungssignal für den Soll-Signalverstärker 161 mit GS3 bezeichnet ist. Analog hierzu umfaßt die Amplitudenregelungseinrichtung 16 in Fig. 2 einen Ist-SignalVerstärker 162, der als variable Dämpfungseinrichtung gezeichnet ist, und der mit einem Verstärkungssteuerungssignal GS2 steuerbar ist. Das verstärkte Soll-Signal am Ausgang des Soll-Signalverstärkers 161 wird in einen Soll-Amplitudendemodulator 163 eingespeist. Entsprechend wird das verstärkte Ist-Signal am Ausgang des Ist-Signalverstärkers 162 ebenfalls in einen Ist-Amplitudendemodulator 164 eingespeist. Die Amplitudendemodulatoren 163 und 164 können z. B. als Gleichrichterdiodenschaltungen ausgebildet sein, oder aber auf eine beliebige andere Art und Weise implementiert sein, um die Amplituden-Hüllkurve des an dieselben anliegenden Eingangssignals zu extrahieren.

Am Ausgang des Amplitudendemodulators 163 für das Soll-Signal liegt dann ein Soll-Amplitudensignal an, das in einen nicht-invertierenden Eingang eines Differenzverstärkers 165 eingespeist wird. Das am Ausgang des Amplitudendemodulators 164 anliegende Amplituden-Ist-Signal wird in den invertierenden Eingang des Differenzverstärkers 165 eingespeist. Das am Ausgang des Differenzverstärkers 165 anliegende verstärkte Differenzsignal wird dann in ein Tiefpaßfilter 166 innerhalb der Amplitudenregelungseinrichtung 16 eingespeist. Das Tiefpaßfilter 166 liefert ausgangsseitig dann das Verstärkungssteuerungssignal, das in den Verstärkungssteuerungseingang 12 des Leistungsverstärkers 13 eingespeist wird. In einem bevorzugten Ausführungsbeispiel der vorliegenden Erfindung wird es bevorzugt, daß der Differenzverstärker 165 ebenfalls eine einstellbare Verstärkung hat, wobei die Verstärkung des Differenzverstärkers 165 durch ein Verstärkungssteuerungssignal GS4 steuerbar ist.

Bei dem in Fig. 2 gezeigten bevorzugten Ausführungsbeispiel ist im Rückkopplungspfad 19 ein Frequenzumsetzer 19c vorgesehen, der einen Mischer M₁ sowie einen Lokaloszillator LO aufweist, die derart implementiert sind, wie es in der Technik bekannt ist, um ein Signal mit einer HF-Frequenz f2 auf eine Zwischenfrequenz f1 herunterzumischen.
Bei dem in Fig. 2 gezeigten bevorzugten Ausführungsbeispiel der vorliegenden Erfindung ist am Eingang 21 ein Signalgenerator angeschlossen, der aus einem EDGE- oder UMTS-Modulator 211 sowie einem IQ-Modulator 212 besteht, wobei der IQ-Modulator 212 ausgebildet ist, um von dem EDGE- oder UMTS-Modulator 211 erzeugte Signalkomponenten, nämlich ein I-Signal und ein Q-Signal, in ein komplexes Wechselsignal auf der Zwischenfrequenz f1 umzusetzen.

Die in Fig. 2 gezeigte Schaltung arbeitet nach dem Konzept des Polar-Loop-Signalrekonstruktionsverfahrens. Hierbei kommen-PLL- (Phase Locked Loop) und ALL- (Amplitude Locked Loop) Rückkoppelschleifen zum Einsatz. Das I/Q-Signal einer EDGE- oder UMTS-Signalquelle wird in dem IQ-Modulator 212 auf eine Trägerfrequenz f1 aufmoduliert. Die Amplitudeninformation des hochfrequenzmodulierten Signals Sᵢₙ(t) wird im Limiter 171 eliminiert. Dies führt dazu, daß das Signal nach dem Limiter 171 nur noch die Phaseninformation enthält.

In dem Phasenfrequenzdetektor PFD 173 findet ein Phasenvergleich zwischen dem Eingangssignal am Ausgang des Limiters 171 und einem rückgeführten Teil des Ausgangssignals am Ausgang des Limiters 172 statt. Das entsprechende Fehlersignal, das in Fig. 2 mit T bezeichnet ist, wird über das Schleifenfilter 174, das einen Tiefpaß-Charakter hat, dem VCO (Voltage Controlled Oscillator) zugeführt. Damit wird der VCO mit einer Mittenfrequenz von f2 auf eine von außen zugeführte Phase synchronisiert.

Bei dem in Fig. 2 gezeigten bevorzugten Ausführungsbeispiel der vorliegenden Erfindung wird im Rückkopplungspfad 19 die Frequenz des Ausgangssignals am Ausgang des Verstärkers 13 im Mischer M₁ von f2 auf f1 umgesetzt, wobei bei einem bevorzugten Ausführungsbeispiel der vorliegenden Erfindung das Signal vor dem Mischer durch den Rückkopplungspfad-Verstärker 19b entsprechen verstärkt bzw. gedämpft wird. Alternativ könnte der Verstärker 19b auch nach dem Mischer angeordnet werden.

Nach der Eliminierung der Amplitudeninformationen des rückgekoppelten Ausgangssignals im Limiter 172 wird das Signal dem zweiten Eingang des Phasenfrequenzdetektors 173 zugeführt.

Die PLL-Schleife mit der Phasenregelungseinrichtung 17 und dem Rückkopplungspfad 19 sorgt somit dafür, daß die Phasendifferenzen, die aufgrund von AM/PM-Verzerrungen im Leistungsverstärker 13 entstehen, durchgehend immer wieder korrigiert werden.

Die Folge davon ist, daß der Einsatz des nichtlinearen HF-Leistungsverstärkers 13, der beispielsweise ein Leistungsverstärker im Klasse-C-Betrieb ist, keine spektrale Verbreiterung des Ausgangssignals am Ausgang 11 des Leistungsverstärkers 13 bewirkt.

Durch die ALL-Schleife, die durch die Amplitudenregelungseinrichtung 16 und den Rückkopplungspfad 19 gebildet wird, wird die Einhüllende des modulierten Eingangssignals Sin(t) auf das Ausgangssignal Sₒᵤₜ (t) abgebildet. Nach der Detektion der Amplitudeninformationen des Eingangssignals und des rückgekoppelten Ausgangssignals in den beiden Amplitudendemodulatoren 163 und 164 wird im Operationsverstärker 165 die Differenz gebildet und verstärkt, und zwar gemäß dem Verstärkungs-Steuerungssignal GS4 für diesen Differenzverstärker 165. Anschließend wird das verstärkte Signal über ein Schleifenfilter 166 mit Tiefpaß-Charakter den nichtlinearen HF-Leistungsverstärker 13 als Amplitudensteuersignal (RS) zugeführt.

Die regelbaren Dämpfungsglieder/Verstärkungsglieder 161, 162 werden für die Leistungsvariation des nicht-linearen HF-Leistungsverstärkers verwendet, ohne daß die PLL-Schleife selbst beeinflußt wird. Damit die PLL-Schleife unbeeinflußt von der Leistungsvariation des nicht-linearen HF-Sendeverstärkers 13 arbeitet, ist der Rückkopplungspfad-Verstärker 19b im Rückkopplungspfad 19 vorgesehen. Die Dämpfung, d. h. negative Verstärkung, des als steuerbaren Dämpfungsglieds ausgeführten Verstärkers 19b ist dabei um so größer, je höher der Signalpegel des Ausgangssignals Sₒᵤₜ (t) ist.

Erfindungsgemäß wird damit die Amplitudeninformation aus dem Signalgenerator durch die ALL-Schleife, die durch die Amplitudenregelungseinrichtung 16 und den Rückkopplungspfad 19 gebildet wird, rekonstruiert, indem beispielsweise eine Arbeitspunktvariation des nicht linearen HF-Leistungsverstärkers 13 vorgenommen wird.

Darüber hinaus wird die Ausgangssignal- Amplitude, also der mittlere Leistungspegel des Signals Sₒᵤₜ (t) am Ausgang der gesamten Sendestufe durch das regelbare Dämpfungsglied, also durch den Rückkopplungspfad-Verstärker 19b auf einen vorzugsweise konstanten Wert bzw. auf einen vorbestimmten Bereich geregelt, der z. B. derart gewählt werden kann, daß der Begrenzer 172 immer sicher arbeitet und eine erwünschte Begrenzung sicherstellt, um ein definiertes Ausgangssignal zum Phasen/Frequenz-Detektor 173 zu liefern, damit die Phasenregelschleife bei einer starken Leistungsvariation nicht ausrastet. Dadurch bleibt die PLL-Schleife, die durch die Phasenregelungseinrichtung 17 und den Rückkopplungspfad 19 gebildet wird, unbeeinflußt von einer Leistungsvariation des HF-Sendeverstärkers 13 beispielsweise aufgrund einer Anforderung einer Handy-Elektronik, aufgrund eines sich verändernden Freiraumübertragungskanals eine Erhöhung/Erniedrigung der Sendeleistung zu erreichen.

Darüber hinaus wird bei dem in Figur 2 gezeigten bevorzugten Ausführungsbeispiel der vorliegenden Erfindung der Signalpegel des Sendeverstärkers durch die Verstärkungseinrichtungen 161 und 162 variiert. Dadurch kann die PLL-Schleife unbeeinflußt weiterarbeiten und rastet bei einer Variation des Signalpegels nicht aus.

Bei dem bevorzugten Ausführungsbeispiel der vorliegenden Erfindung werden die Obertragungscharakteristika der beiden Schleifen so eingestellt, daß ihre Bandbreiten, also die Grenzfrequenzen der Tiefpässe 166 und 174 so gewählt werden, daß die Übertragung des EDGE-Signals und des UMTS-Signals problemlos möglich sind. Dies wird dadurch erreicht, daß die Bandbreiten so groß sind, daß durch die Regelschleifen kein Informationsverlust auftritt. Eine zu berücksichtigende Nutzbandbreite bei UMTS und EDGE liegt bei 2 MHz.

Die Verstärkung des Differenzverstärkers 165 wird vorzugsweise gerade eingestellt, daß eine vollständige Abbildung der Amplitudeninformation auf das Ausgangssignal erfolgt.

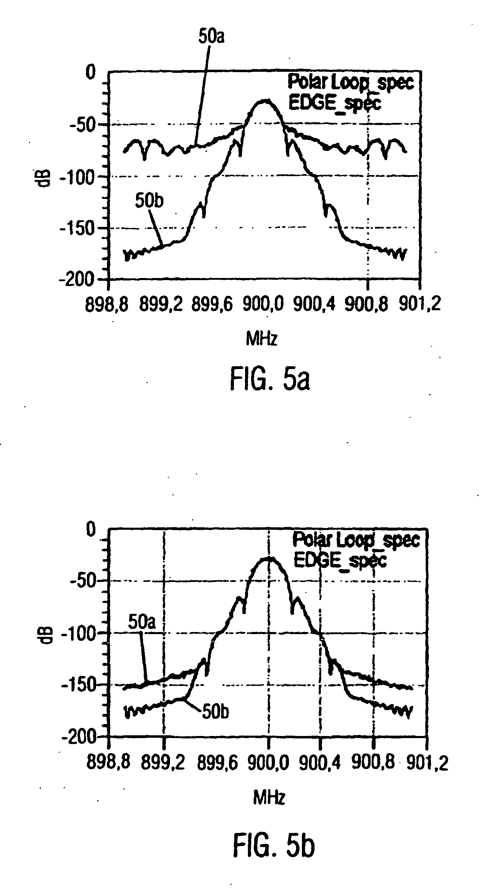

Hierzu wird auf die Figuren 5a und 5b eingegangen. Figur 5a zeigt ein Spektrum einer in Figur 2 dargestellten Polar-Loop vor einer Optimierung. Das Spektrum ist in Figur 5a mit 50a bezeichnet. Zu Vergleichszwecken ist in Figur 5a ferner ein Spektrum gemäß der EDGE-Spezifikation gezeigt, das mit 50b bezeichnet ist. Aus Fig. 5a ist ersichtlich, daß die beiden Spektren lediglich in einem schmalen Bereich um die Mittenfrequenz herum "übereinander liegen", daß die Polar-Loop jedoch noch nicht ausreichend optimiert ist, wenn zu größeren Ablagefrequenzen, also Frequenzentfernungen von der Mittenfrequenz bei 900 MHz gegangen wird. Fig. 5b zeigt einen Zustand nach einer Optimierung, bei der im Vergleich zu Fig. 5a die Verstärkung des Operationsverstärkers 165 in Fig. 2 erhöht worden ist. Die Erhöhung des Verstärkungsfaktors GS4 in Fig. 5b gegenüber einem Optimierungs-Startwert in Fig. 5a führt dazu, daß sich das Polar-Loop-Spektrum 50a gewissermaßen auf das EDGE-Spektrum 50b "legt", und zwar bis zu einem Bereich von etwa 100 dBc. An dieser Stelle sei darauf hingewiesen, daß allzu große Werte von GS4 dazu führen, daß die Schleifenverstärkung der Amplitudenregelschleife immer weiter ansteigt, so daß, wie es für Regelschleifen allgemein bekannt ist, die Schwingneigung immer weiter ansteigt. Es wird daher bevorzugt, die Verstärkung des Operationsverstärkers 165 so hoch zu machen, daß die Polar-Loop ausreichend selektiv ist, um geforderte Nebenkanalspezifikationen zu erfüllen, daß jedoch die Verstärkung des Differenzverstärkers 165 nicht ohne Zwang weiter erhöht wird, damit die Amplitudenregelschleife sicher arbeitet und nicht aufgrund der hohen Schleifenverstärkung zu schwingen anfängt.

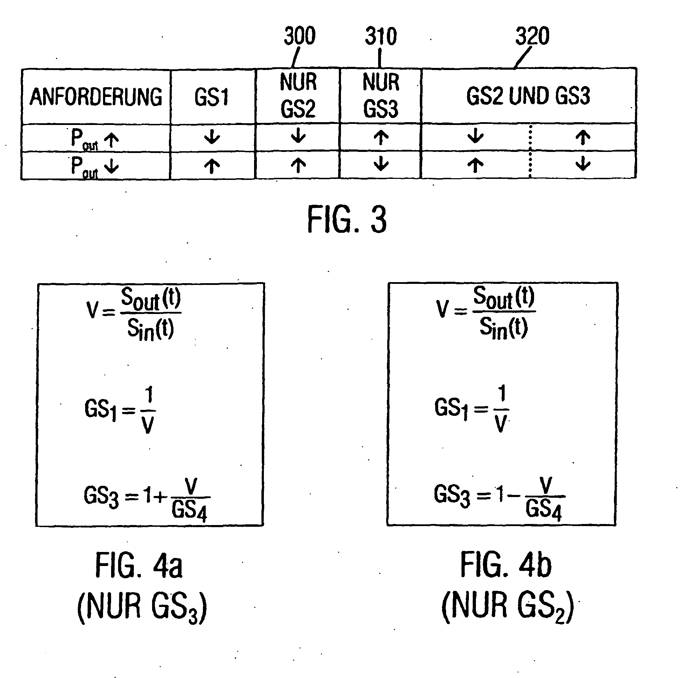

Nachfolgend wird anhand der in Fig. 3 gezeigten Tabelle dargestellt, wie die einzelnen Verstärkungsfaktoren verändert werden müssen, wenn entsprechende Anforderungen nach höherer oder geringerer Ausgangsleistung Pₒᵤₜ stattfinden. An dieser Stelle sei darauf hingewiesen, daß die Tabelle in Fig. 3 drei Fälle behandelt, nämlich daß nur der Verstärker 162 über GS2 in der Amplitudenregelungseinrichtung verändert wird (Spalte 300), daß nur der Verstärker 161 in der Amplitudenregelungseinrichtung 16 von Fig. 2 verändert wird (Spalte 310), oder daß sowohl der Verstärker 162 (GS2) als auch der Verstärker 161 (GS3) verändert werden (Spalte 320). Wie bereits vorstehend ausgeführt, wird es bevorzugt, den in Spalte 310 dargestellten Fall zu verwenden, da in diesem Fall nicht das Ist-Signal 18 angetastet werden muß, sondern lediglich das Soll-Signal am Eingang 21 der Schaltung.

Wird von der Steuerungseinrichtung 22 in Fig. 2 eine Anforderung nach einer Erhöhung der Ausgangsleistung erhalten, so muß zunächst die Verstärkung des Rückkopplungspfad-Verstärkers 19b verringert werden. Die Verstärkung des Verstärkers 162 muß in diesem Fall ebenfalls verringert werden, wenn der Fall 300 vorhanden ist. Ist hingegen der Fall 310 vorhanden, so muß die Verstärkung des Verstärkers 161 erhöht werden. Ist dagegen der Fall 320 vorhanden, so muß GS2 verringert werden, und muß GS3 erhöht werden.

Im Falle einer Anforderung nach einem Sinken der Ausgangsleistung muß die Verstärkung des Rückkopplungspfad-Verstärkers 19b erhöht werden. Im Falle der Spalte 300 wird GS2 erhöht. Im Falle der Spalte 310 wird GS3 erniedrigt. Im Falle der Spalte 320 wird GS2 erhöht und wird GS3 erniedrigt.

Die Steuergröße GS1 wird somit in Abhängigkeit der Ausgangsleistung des Sendeverstärkers eingestellt. Z. B. muß bei einer Erhöhung der Ausgangsleistung des Sendeverstärkers um z. B. 5 dB (durch GS2 und/oder GS3) das Signal im regelbaren Dämpfungsglied GS1 etwa um 5 dB gedämpft werden. Dies sorgt dafür, daß das Signal nach dem regelbaren Dämpfungsglied GS1 immer den gleichen Leistungspegel hat, d. h. stabilisiert und konstant gehalten wird. Die Steuergrößen GS2 und/oder GS3 (je nach Implementierung) sind für die Leistungsvariation des Sendeverstärkers nach dem EDGE- und dem UMTS-Standard (3GPP) zuständig. Dadurch wird die Differenzspanne im Operationsverstärker zwischen dem Eingangssignal und dem rückgeführten Ausgangssignal je nach Bedarf der Ausgangsleistung des Sendeverstärkers variiert. Die Steuergröße des Operationsverstärkers wird für den EDGE-Standard oder den UMTS-Standard vorzugsweise fest eingestellt. Im eingeschwungenen Zustand wird das resultierende Fehlersignal in der ALL-Schleife, das durch die Nichtlinearität des Systems verursacht wird, im Operationsverstärker durch die Steuergröße GS4 soweit verstärkt, daß das Spektrum des Ausgangssignals für den EDGE-Standard bei +/- 200 kHz und +/- 300 kHz besser als -54 dBc bzw. -60 dBc wird, wie es anhand der Figuren 5a und 5b dargestellt worden ist.

An dieser Stelle sei darauf hingewiesen, daß gemäß dem UMTS-Standard das Spektrum des Ausgangssignals des Verstärkers in dem gesamten Nachbarkanal besser als -45 dBc sein muß.

Es sei ferner darauf hingewiesen, daß es erfindungsgemäß bevorzugt wird, die Bandbreiten der Amplitudenregelschleife und der Phasenregelschleife so einzustellen, daß eine Übertragung des EDGE-Signals und (zugleich) des UMTS-Signals möglich ist.

Nachfolgend wird anhand von Fig. 4a und 4b ein gleichmäßiger Zusammenhang für die einzelnen Werte gegeben, wenn das Verhältnis von Sₒᵤₜ (t) am Ausgang des Richtkopplers 19a zu Sᵢₙ (t) am Eingang des Begrenzers 171 zu V angenommen wird. Fig. 4a bezieht sich auf den Fall der Spalte 310 in Fig. 3, während sich Fig. 4b auf den Fall der Spalte 300 in Fig. 3 bezieht.

Obgleich in dem vorstehenden Ausführungsbeispiel dargelegt worden ist, daß das Ist-Signal 18 und/oder das Soll-Signal 20 durch die Verstärkungseinrichtung 161, 162 gemäß den Variationsanforderungen an die Steuerung 22 variiert werden, sei darauf hingewiesen, daß alternativ auch das Ausgangssignal des Demodulators 163 und/oder das Ausgangssignal des Demodulators 164 variiert werden könnten, um ein gemäß den Leistungsanforderungen verändertes Verstärkungssteuerungssignal am Ausgang der Amplitudenregelungseinrichtung 16 zu erzeugen, so lange das Verstärkungssteuerungssignal am Ausgang der Amplitudenregelungseinrichtung 16 zu einer entsprechend variierten Ausgangsleistung des Verstärkers führt. Gleichzeitig wird entsprechend der veränderten Verstärkung der Rückkopplungspfad-Verstärker 19b entgegengesetzt proportional mitgeführt, um das Ist-Signal, das in die Phasenregelungseinrichtung 17 eingespeist wird, in dem vorbestimmten Bereich zu halten, der, wie es ausgeführt worden ist, prinzipiell beliebig klein gemacht werden kann und im Idealfall zu einem im wesentlichen konstanten Wert unabhängig von der aktuellen Verstärkung des Verstärkers 13 degeneriert.

## Patentansprüche

1. Sendestufe zum Liefern eines Eingangssignals in einen Signaleingang (10) eines Verstärkers (13), der ferner einen Verstärkungssteuerungseingang (12) und einen Signalausgang (11) aufweist, mit folgenden Merkmalen:
einem Signaleingang (21) zum Erhalten eines zu sendenden Soll-Signals (20);
einem steuerbaren Oszillator (14) mit einem Frequenzsteuerungseingang (15) und einem Oszillatorausgang, wobei der Oszillatorausgang mit dem Signaleingang (10) des Verstärkers (13) wirksam koppelbar ist;
einem Rückkopplungspfad (19) mit einem Rückkopplungspfad-Verstärker (19b) mit variabler Verstärkung (GS1);
einer Phasenregelungseinrichtung (17) zum Erzeugen eines Frequenzsteuerungssignals für den Frequenzsteuerungseingang (15) des steuerbaren Oszillators (14), wobei die Phasenregelungseinrichtung (17) mit dem Rückkopplungspfad (19) wirksam gekoppelt ist, um ein Ist-Signal (18) zu erhalten, und wobei die Phasenregelungseinrichtung (17) ferner mit dem Signaleingang (21) wirksam gekoppelt ist, um das Soll-Signal zu erhalten;
einer Amplitudenregelungseinrichtung (16) zum Erzeugen eines Verstärkungssteuerungssignals für den Verstärkungssteuerungseingang (12) des Verstärkers (13), wobei die Amplitudenregelungseinrichtung (16) mit dem Rückkopplungspfad (19) wirksam gekoppelt ist, um das Ist-Signal (18) zu erhalten, und wobei die Amplitudenregelungseinrichtung (16) mit dem Signaleingang (21) gekoppelt ist, um das Soll-Signal (20) zu erhalten; und
einer Steuerungseinrichtung (22) zum Steuern eines mittleren Leistungspegels eines Signals an dem Signalausgang (11) des Verstärkers,
wobei die Steuerungseinrichtung (22) ausgebildet ist, um abhängig von einer Anforderung (23) nach einer Veränderung des mittleren Leistungspegels die Amplitudenregelungseinrichtung (16) anzusteuern, um unter Verwendung des Ist-Signals (18) und/oder des Soll-Signals (20) (25) ein verändertes Verstärkungssteuerungssignal zu erzeugen und gleichzeitig eine Verstärkung (GS1) des Rückkopplungspfad-Verstärkers (19b) so zu variieren (24), daß eine Amplitude eines Signals in dem Rückkopplungspfad (19) signalflußmäßig hinter dem Rückkopplungspfad-Verstärker (19b), das gleich dem Ist-Signal (18) ist, oder das von dem Ist-Signal ableitbar (19c) ist, in einem vorbestimmten Bereich bleibt, und
wobei die Steuerungseinrichtung (22) ferner ausgebildet ist, um bei einer Anforderung (23) nach einem höheren mittleren Leistungspegel die Verstärkung (GS1) der Rückkopplungspfad-Verstärkers (19b) zu reduzieren und die Amplitudenregelungseinrichtung (16) so anzusteuern (GS2, GS3), daß das Verstärkungssteuerungssignal eine Verstärkungserhöhung des Verstärkers (13) bewirkt, und um bei einer Anforderung (23) nach einem niedrigeren mittleren Leistungspegel die Verstärkung (GS1) der Rückkopplungspfad-Verstärkers (19b) zu erhöhen und die Amplitudenregelungseinrichtung (16) so anzusteuern (GS2, GS3), daß das Verstärkungssteuerungssignal eine Verstärkungsverringerung des Verstärkers (13) bewirkt.

2. Sendestufe nach Anspruch 1,
bei der die Amplitudenregelungseinrichtung einen variablen Soll-Verstärker (161) für das Soll-Signal (20) aufweist, und
bei der die Steuereinrichtung (22) ausgebildet ist, um auf die Anforderung, den mittleren Leistungspegel zu erhöhen, die Verstärkung (GS1) des variablen Rückkopplungspfad-Verstärkers (19b) zu reduzieren und eine Verstärkung (GS3) des variablen Soll-Verstärkers (161) zu erhöhen, oder
bei der die Steuereinrichtung (22) ausgebildet ist, um auf eine Anforderung, den mittleren Leistungspegel zu erniedrigen, die Verstärkung (GS1) des variablen Rückkopplungspfad-Verstärkers (19b) zu erhöhen und die Verstärkung (GS3) des variablen Soll-Verstärkers (161) zu erniedrigen.

3. Sendestufe nach Anspruch 1,
bei der die Amplitudenregelungseinrichtung (16) einen variablen Ist-Verstärker (162) zum Verstärken des Ist-Signals (18) aufweist, und
bei der die Steuerungseinrichtung (22) ausgebildet ist, um auf die Anforderung, den mittleren Leistungspegel zu erhöhen, die Verstärkung (GS1) des variablen Rückkopplungspfad-Verstärkers (19b) zu reduzieren und die Verstärkung (GS2) des variablen Ist-Verstärkers (162) zu reduzieren, oder
bei der die Steuerungseinrichtung (22) ausgebildet ist, um auf eine Anforderung, den mittleren Leistungspegel zu reduzieren, die Verstärkung (GS1) des Rückkopplungspfad-Verstärkers (19b) zu erhöhen und die Verstärkung (GS2) des variablen Ist-Verstärkers (162) zu erhöhen.

4. Sendestufe nach einem der vorhergehenden Ansprüche, bei der der Rückkopplungspfad-Verstärker (19b) als variables Dämpfungsglied ausgeführt ist, das ansteuerbar ist, um eine negative Verstärkung im negativen dB-Bereich durchzuführen.

5. Sendestufe nach einem der vorhergehenden Ansprüche,
bei der die Amplitudenregelungseinrichtung (16) einen Differenzverstärker (165) und ein nachgeschaltetes Tiefpaßfilter (166) aufweist, wobei ein Ausgangssignal des Tiefpaßfilters (166) mit dem Verstärkungssteuerungseingang (12) des Verstärkers (13) wirksam koppelbar ist,
wobei die Amplitudenregelungseinrichtung ferner einen Soll-Amplitudendemodulator (163) aufweist, der mit einem nicht-invertierenden Eingang des Differenzverstärkers (165) gekoppelt ist, und
wobei die Amplitudenregelungseinrichtung (16) ferner einen Ist-Amplitudendemodulator (164) aufweist, der mit einem invertierenden Eingang des Differenzverstärkers (165) wirksam gekoppelt ist.

6. Sendestufe nach einem der vorhergehenden Ansprüche,
bei der die Phasenregelungseinrichtung (17) einen Phasen/Frequenzdetektor (173) und ein nachgeschaltetes Phasentiefpaßfilter (174) aufweist, wobei ein Ausgangssignal des Phasentiefpaßfilters mit dem Steuerungseingang (15) des steuerbaren Oszillators (14) wirksam gekoppelt ist, und
wobei die Phasenregelungseinrichtung (17) ferner einen Soll-Phasen-Detektor (171) aufweist, der mit einem ersten Eingang des Phasen/Frequenz-Detektors (173) gekoppelt ist, und
wobei die Phasenregelungseinrichtung (17) ferner einen Ist-Phasen-Detektor (172) aufweist, der mit einem zweiten Eingang des Phasen/Frequenz-Detektors (173) wirksam gekoppelt ist.

7. Sendestufe nach Anspruch 6,
bei der der Ist-Phasendetektor (172) einen vorbestimmten Eingangsdynamikbereich aufweist, wobei der vorbestimmte Bereich des Signals, das signalflußmäßig hinter dem Rückkopplungspfad-Verstärker (19b) erzeugbar ist, kleiner oder gleich dem vorbestimmten Eingangsdynamikbereich des Ist-Phasendetektors (172) ist.

8. Sendestufe nach Anspruch 7, bei der der Ist-Phasendetektor eine Begrenzerschaltung aufweist.

9. Sendestufe nach einem der vorhergehenden Ansprüche,
bei der das zu sendende Soll-Signal (20) eine erste Trägerfrequenz f₁ hat und das Signal an dem Signalausgang (11) des Verstärkers (13) eine zweite Trägerfrequenz f₂ hat, wobei in dem Rückkopplungspfad (19b) ferner eine Umsetzungseinrichtung (19c) zum Umsetzen der zweiten Trägerfrequenz auf die erste Trägerfrequenz vorgesehen ist.

10. Sendestufe nach Anspruch 9, bei der die FrequenzUmsetzungseinrichtung signalflußmäßig hinter dem variablen Rückkopplungspfad-Verstärker (19b) vorgesehen ist.

11. Sendestufe nach einem der vorhergehenden Ansprüche, bei der das zu sendende Signal an dem Signaleingang (21) gemäß einem GSM-EDGE-Standard oder gemäß einem UMTS-Standard amplitudenmoduliert und phasenmoduliert ist (211, 212).

12. Sendestufe nach einem der vorhergehenden Ansprüche,
bei der die Steuerungseinrichtung (22) eine Steuerungseinrichtung aufweist, in der als Eingangsgröße eine Leistungsvariation und als Ausgangsgröße ein zu erzeugender Verstärkungswert für den Rückkopplungspfad-Verstärker (19b) und ein Verstärkungswert für eine Verstärkungseinrichtung (161, 162) innerhalb der Amplitudenregelungseinrichtung (16) zum Variieren des Verstärkungssteuerungssignals vorgesehen ist.

13. Sendestufe nach einem der vorhergehenden Ansprüche, bei der die Steuereinrichtung (22) ausgebildet ist, um die Anforderung (22) nach einer Variation von einer Feldstärke-Bestimmungseinrichtung eines zellularen Funk-Sende/Empfangsgeräts zu erhalten.

14. Sendestufe nach Anspruch 5, bei der der Differenzverstärker (165) eine einstellbare Verstärkung GS4 aufweist, die so gewählt ist, daß eine Nachbarkanalspezifikation einer für die Sendestufe gültigen Funkspezifikation erfüllt ist, wobei die einstellbare Verstärkung GS4 in einem Betrieb der Sendestufe auf einem festen Wert gehalten wird.

15. Sendestufe nach einem der vorhergehenden Ansprüche, bei der Grenzfrequenzen der Amplitudenregelungseinrichtung und der Phasenregelungseinrichtung so dimensioniert sind, daß durch die Amplitudenregelungseinrichtung und die Phasenregelungseinrichtung kein Informationsverlust auftritt.

16. Sendestufe nach einem der vorhergehenden Ansprüche,
bei der die Steuerungseinrichtung (22) ausgebildet ist, um den variablen Rückkopplungspfad-Verstärker (19b) so anzusteuern, daß der vorbestimmte Bereich kleiner als ein Dynamikbereich ist, der durch eine Anforderung (23) nach einer maximalen Variation in dem mittleren Leistungspegel des Signals an dem Ausgang (11) des Leistungsverstärkers (13) erzeugbar ist.

17. Sendestufe nach einem der vorhergehenden Ansprüche,
bei der der vorbestimmte Bereich eine Abweichung um einen Nennwert für die Amplitude des Signals signalflußmäßig hinter dem Rückkopplungspfad-Verstärker (19b) innerhalb einer Variationsbandbreite von +/- 10 % für sämtliche Leistungspegelvariationen umfaßt.

18. Verfahren zum Liefern eines Eingangssignals in einen Signaleingang (10) eines Verstärkers (13), der ferner einen Verstärkungssteuerungseingang (12) und einen Signalausgang (11) aufweist, mit folgenden Schritten:
Erhalten eines zu sendenden Soll-Signals (20) über einen Signaleingang (21);
Erzeugen eines Frequenzsteuerungssignals für einen Frequenzsteuerungseingang (15) eines steuerbaren Oszillators (14) durch eine Phasenregelungseinrichtung (17), wobei der steuerbare Oszillator ferner einen Oszillatorausgang aufweist, wobei der Oszillatorausgang mit dem Signaleingang (10) des Verstärkers (13) wirksam koppelbar ist;
Koppeln der Phasenregelungseinrichtung (17) mit einem Rückkopplungspfad (19) mit einem Rückkopplungspfad-Verstärker (19b) mit variabler Verstärkung (GS1), um ein Ist-Signal (18) zu erhalten, und Koppeln der Phasenregelungseinrichtung (17) mit dem Signaleingang (21), um das Soll-Signal zu erhalten;
Erzeugen eines Verstärkungssteuerungssignals für den Verstärkungssteuerungseingang (12) des Verstärkers (13) mit einer Amplitudenregelungseinrichtung (16); und
Steuern eines mittleren Leistungspegels eines Signals an dem Signalausgang (11) des Verstärkers mit einer Steuerungseinrichtung (22), durch folgenden Schritt:
abhängig von einer Anforderung (23) nach einer Veränderung des mittleren Leistungspegels, Ansteuern der Amplitudenregelungseinrichtung (16), um unter Verwendung des Ist-Signals (18) und/oder des Soll-Signals (20) (25) ein verändertes Verstärkungssteuerungssignal zu erzeugen und gleichzeitig eine Verstärkung (GS1) des Rückkopplungspfad-Verstärkers (19b) so zu variieren (24), daß eine Amplitude eines Signals in dem Rückkopplungspfad (19) signalflußmäßig hinter dem Rückkopplungspfad-Verstärker (19b), das gleich dem Ist-Signal (18) ist, oder das von dem Ist-Signal ableitbar (19c) ist, in einem vorbestimmten Bereich bleibt, und wobei der Schritt des Ansteuern folgende Schritte aufweist:
bei einer Anforderung (23) nach einem höheren mittleren Leistungspegel, Reduzieren der Verstärkung (GS1) des Rückkopplungspfad-Verstärkers (19b) und Ansteuern der Amplitudenregelungseinrichtung (16) so, daß das Verstärkungssteuerungssignal eine Verstärkungserhöhung des Verstärkers (13) bewirkt, und
bei einer Anforderung (23) nach einem niedrigeren mittleren Leistungspegel, Erhöhen der Verstärkung (GS1) des Rückkopplungspfad-Verstärkers (19b) und Ansteuern der Amplitudenregelungseinrichtung (16) so, daß das Verstärkungssteuerungssignal eine Verstärkungsverringerung des Verstärkers (13) bewirkt.

## Claims

1. A transmission stage for providing an input signal to a signal input (10) of an amplifier (13), further comprising an amplification control input (12) and a signal output (11), comprising:
a signal input (21) for receiving a nominal signal (20) to be transmitted;
a controllable oscillator (14) having a frequency control input (15) and an oscillator output, wherein the oscillator output may be operatively coupled to the signal input (10) of the amplifier (13);
a feedback path (19) having a feedback path amplifier (19b) having a variable amplification (GS1);
a phase regulation means (17) for generating a frequency control signal for the frequency control input (15) of the controllable oscillator (14), wherein the phase regulation means (17) is operatively coupled to the feedback path (19) in order to receive an actual signal (18), and wherein the phase regulation means (17) is further operatively coupled to the signal input (21) in order to receive the nominal signal;
an amplitude regulation means (16) for generating an amplification control signal for the amplification control input (12) of the amplifier (13), wherein the amplitude regulation means (16) is operatively coupled to the feedback path (19) in order to receive the actual signal (18), and wherein the amplitude regulation means (16) is coupled to the signal input (21) in order to receive the nominal signal (20); and
a control means (22) for controlling a mean power level of a signal at the control output (11) of the amplifier,
wherein the control means (22) is implemented in order to control the amplitude regulation means (16) depending on a request (23) for a change of the mean power level, in order to generate a changed amplification control signal using the actual signal (18) and/or the nominal signal (20), (25) and simultaneously vary (24) an amplification (GS1) of the feedback path amplifier (19b) so that an amplitude of a signal in the feedback path (19) which is in the signal flow behind the feedback path amplifier (19b) which is equal to the actual signal (18) or which may be derived (19c) from the actual signal, remains in a predetermined range, and
wherein the control means (22) is further implemented in order to reduce the amplification (GS1) of the feedback path amplifier (19b) in a request (23) for a higher mean power level and to control (GS2, GS3) the amplitude regulation means (16) so that the amplification control signal causes an amplification increase of the amplifier (13), and in order to increase the amplification (GS1) of the feedback path amplifier (19b) in a request (23) for a lower mean power level and to control (GS2, GS3) the amplitude regulation means (16) so that the amplification control signal causes an amplification decrease of the amplifier (13).

2. The transmission stage according to claim 1,
wherein the amplitude regulation means comprises a variable nominal amplifier (161) for the nominal signal (20), and
wherein the control means (22) is implemented in order to increase the mean power level, reduce the amplification (GS1) of the variable feedback path amplifier (19b) and increase an amplification (GS3) of the variable nominal amplifier (161) upon the request, or
wherein the control means (22) is implemented in order to decrease the mean power level, increase the amplification (GS1) of the variable feedback path amplifier (19b) and decrease the amplification (GS3) of the variable nominal amplifier (161) upon a request.

3. The transmission stage according to claim 1,
wherein the amplitude regulation means (16) comprises a variable actual amplifier (162) for amplifying the actual signal (18), and
wherein the control means (22) is implemented in order to increase the mean power level, reduce the amplification (GS1) of the variable feedback path amplifier (19b) and reduce the amplification (GS2) of the variable actual amplifier (162) upon the request, or
wherein the control means (22) is implemented in order to reduce the mean power level, increase the amplification (GS1) of the feedback path amplifier (19b) and increase the amplification (GS2) of the variable actual amplifier (162) upon a request.

4. The transmission stage according to one of the preceding claims, wherein the feedback path amplifier (19b) is implemented as a variable attenuation member which is controllable in order to perform a negative amplification in the negative dB range.

5. The transmission stage according to one of the preceding claims,
wherein the amplitude regulation means (16) comprises a differential amplifier (165) and a downstream low-pass filter (166), wherein an output signal of the low-pass filter (166) may operatively be coupled to the amplification control input (12) of the amplifier (13),
wherein the amplitude regulation means further comprises a nominal amplitude demodulator (163) coupled to a non-inverting input of the differential amplifier (165), and
wherein the amplitude regulation means (16) further comprises an actual amplitude demodulator (164) operatively coupled to an inverting input of the differential amplifier (165).

6. The transmission stage according to one of the preceding claims,
wherein the phase regulation means (17) comprises a phase/frequency detector (173) and a downstream phase low-pass filter (174), wherein an output signal of the phase low-pass filter is operatively coupled to the control input (15) of the controllable oscillator (14), and
wherein the phase regulation means (17) further comprises a nominal phase detector (171) coupled to a first input of the phase/frequency detector (173), and
wherein the phase regulation means (17) further comprises an actual phase detector (172) operatively coupled to a second input of the phase/frequency detector (173).

7. The transmission stage according to claim 6,
wherein the actual phase detector (172) comprises a predetermined input dynamic range, wherein the predetermined range of the signal that may be generated in the signal flow behind the feedback path amplifier (19b) is smaller than or equal to the predetermined input dynamic range of the actual phase detector (172).

8. The transmission stage according to claim 7, wherein the actual phase detector comprises a limiter circuit.

9. The transmission stage according to one of the preceding claims,
wherein the nominal signal (20) to be transmitted comprises a first carrier frequency f₁ and the signal at the signal output (11) of the amplifier (13) comprises a second carrier frequency f₂, wherein in the feedback path (19b) further a conversion means (19c) is provided for converting the second carrier frequency to the first carrier frequency.

10. The transmission stage according to claim 9, wherein the frequency conversion means is provided in the signal flow behind the variable feedback path amplifier (19b).

11. The transmission stage according to one of the preceding claims, wherein the signal to be transmitted is amplitude-modulated and phase-modulated (211, 212) at the signal input (21) according to a GSM EDGE standard or according to a UMTS standard.

12. The transmission stage according to one of the preceding claims,
wherein the control means (22) comprises a control means in which as an input value a power variation and as an output value an amplification value to be generated for the feedback path amplifier (19b) and an amplification value for an amplification means (161, 162) within the amplitude regulation means (16) for varying the amplification control signal are provided.

13. The transmission stage according to one of the preceding claims, wherein the control means (22) is implemented in order to obtain the request (22) for a variation from a field strength determination means of a cellular radio transmission/reception device.

14. The transmission stage according to claim 5, wherein the differential amplifier (165) comprises a settable amplification GS4 which is selected so that a neighboring channel specification of a radio specification valid for the transmission stage is fulfilled, wherein the settable amplification GS4 is maintained on a fixed value in an operation of the transmission stage.

15. The transmission stage according to one of the preceding claims, wherein cut-off frequencies of the amplitude regulation means and the phase regulation means are sized so that by the amplitude regulation means and the phase regulation means no information loss occurs.

16. The transmission stage according to one of the preceding claims,
wherein the control means (22) is implemented in order to control the variable feedback path amplifier (19b) so that the predetermined range is smaller than a dynamic range that may be generated by a request (23) for a maximum variation in the mean power level of the signal at the output (11) of the power amplifier (13).

17. The transmission stage according to one of the preceding claims,
wherein the predetermined range includes a deviation by a nominal value for the amplitude of the signal in the signal flow behind the feedback path amplifier (19b) within a variation bandwidth of +/- 10% for any power level variations.

18. A method for providing an input signal to a signal input (10) of an amplifier (13), further comprising an amplification control input (12) and a signal output (11), comprising:
receiving, via a signal input (21), a nominal signal (20) to be transmitted;
generating a frequency control signal for a frequency control input (15) of a controllable oscillator (14) by a phase regulation means (17), the controllable oscillator further comprising an oscillator output, wherein the oscillator output may be operatively coupled to the signal input (10) of the amplifier (13);
coupling the phase regulation means (17) to a feedback path (19) having a feedback path amplifier (19b) having a variable amplification (GS1) so as to obtain an actual signal (18), and coupling the phase regulation means (17) to the signal input (21) to obtain the nominal signal;
generating an amplification control signal for the amplification control input (12) of the amplifier (13) with an amplitude regulation means (16);
controlling a mean power level of a signal at the signal output (11) of the amplifier with a control means (22) using the following step:
depending on a request (23) for a change of the mean power level, controlling the amplitude regulation means (16) in order to generate a changed amplification control signal using the actual signal (18) and/or the nominal signal (20) (25) and simultaneously vary (24) an amplification (GS1) of the feedback path amplifier (19b) so that an amplitude of a signal in the feedback path (19) which is in the signal flow behind the feedback path amplifier (19b) which is equal to the actual signal (18) or which may be derived (19c) from the actual signal, remains in a predetermined range, and wherein the controlling step comprises:
in a request (23) for a higher mean power level, reducing the amplification (GS1) of the feedback path amplifier (19b) and controlling the amplitude regulation means (16) so that the amplification control signal causes an amplification increase of the amplifier (13), and
in a request (23) for a lower mean power level, increasing the amplification (GS1) of the feedback path amplifier (19b) and controlling the amplitude regulation means (16) so that the amplification control signal causes an amplification decrease of the amplifier (13).

## Revendications

1. Etage émetteur destiné à fournir un signal d'entrée à une entrée de signal (10) d'un amplificateur (13) présentant, par ailleurs, une entrée de réglage d'amplification (12) et une sortie de signal (11), aux caractéristiques suivantes :
une entrée de signal (21) destinée à obtenir un signal de consigne à émettre (20) ;
un oscillateur réglable (14) avec une entrée de réglage de fréquence (15) et une sortie d'oscillateur, la sortie d'oscillateur pouvant être couplée de manière active à l'entrée de signal (10) de l'amplificateur (13) ;
un trajet de couplage rétroactif (19) avec un amplificateur de trajet de couplage rétroactif (19b) à amplification variable (GS 1) ;
un dispositif de régulation de phase (17) destiné à générer un signal de réglage de fréquence pour l'entrée de réglage de fréquence (15) de l'oscillateur réglable (14), le dispositif de régulation de phase (17) étant couplé de manière active au trajet de couplage rétroactif (19), pour obtenir un signal réel (18), et le dispositif de régulation de phase (17) étant, par ailleurs, couplé de manière active à l'entrée de signal (21), pour obtenir le signal de consigne ;
un dispositif de réglage d'amplitude (16) destiné à générer un signal de réglage d'amplification pour l'entrée de réglage d'amplification (12) de l'amplificateur (13), le dispositif de réglage d'amplitude (16) étant couplé de manière active au trajet de couplage rétroactif (19), pour obtenir le signal réel (18), et le dispositif de réglage d'amplitude (16) étant couplé à l'entrée de signal (21), pour obtenir le signal de consigne (20) ; et
un dispositif de réglage (22) destiné à régler un niveau de puissance moyen d'un signal à la sortie de signal (11) de l'amplificateur,
le dispositif de réglage (22) étant réalisé de manière à activer, en fonction d'une demande (23) de modification du niveau de puissance moyen, le dispositif de réglage d'amplitude (16), pour générer, à l'aide du signal réel (18) et/ou du signal de consigne (20) (25), un signal de réglage d'amplification modifié et à faire varier (24), simultanément, une amplification (GS1) de l'amplificateur de trajet de couplage rétroactif (19b) de sorte qu'une amplitude d'un signal dans le trajet de couplage rétroactif (19), dans le sens de la circulation de signal, après l'amplificateur de trajet de couplage rétroactif (19b), qui est égal au signal réel (18) ou qui peut être dérivé du signal réel (19c), reste dans une plage prédéterminée, et
le dispositif de réglage (22) étant, par ailleurs, réalisé de manière à réduire, en cas d'une demande (23) d'un niveau de puissance moyen supérieur, l'amplification (GS1) de l'amplificateur de trajet de couplage rétroactif (19b) et à activer (GS2, GS3) le dispositif de réglage d'amplitude (16) de sorte que le signal de réglage d'amplification entraîne une augmentation d'amplification de l'amplificateur (13), et à augmenter, lors d'une demande (23) d'un niveau de puissance moyen inférieur, l'amplification (GS1) de l'amplificateur de trajet de couplage rétroactif (19b) et à activer (GS2, GS3) le dispositif de réglage d'amplitude (16) de sorte que le signal de réglage d'amplification entraîne une diminution d'amplification de l'amplificateur (13).

2. Etage émetteur selon la revendication 1,
dans lequel le dispositif de réglage d'amplitude présente un amplificateur de consigne variable (161) du signal de consigne (20), et
dans lequel le dispositif de réglage (22) est réalisé de manière à réduire, à la demande d'augmenter le niveau de puissance moyen, l'amplification (GS1) de l'amplificateur de trajet de couplage rétroactif variable (19b) et à augmenter une amplification (GS3) de l'amplificateur de consigne variable (161), ou
dans lequel le dispositif de réglage (22) est réalisé de manière à augmenter, à une demande de réduire le niveau de puissance moyen, l'amplification (GS1) de l'amplificateur de trajet de couplage rétroactif (19b) variable et à réduire l'amplification (GS3) de l'amplificateur de consigne variable (161).

3. Etage émetteur selon la revendication 1,
dans lequel le dispositif de réglage d'amplitude (16) présente un amplificateur réel variable (162) destiné à amplifier le signal réel (18), et
dans lequel le dispositif de réglage (22) est réalisé de manière à diminuer, à la demande d'augmenter le niveau de puissance moyen, l'amplification (GS1) de l'amplificateur de trajet de couplage rétroactif variable (19b) et à diminuer l'amplification (GS2) de l'amplificateur réel variable (162), ou
dans lequel le dispositif de réglage (22) est réalisé de manière à augmenter, à une demande de réduire le niveau de puissance moyen, l'amplification (GS1) de l'amplificateur de trajet de couplage rétroactif (19b) et à augmenter l'amplification (GS2) de l'amplificateur réel variable (162).

4. Etage émetteur selon l'une des revendications précédentes, dans lequel l'amplificateur de trajet de couplage rétroactif (19b) est réalisé sous forme d'élément d'amortissement variable qui peut être activé pour effectuer une amplification négative dans la plage de dB négative.

5. Etage émetteur selon l'une des revendications précédentes,
dans lequel le dispositif de réglage d'amplitude (16) présente un amplificateur différentiel (165) et un filtre passe-bas (166) connecté en aval, un signal de sortie du filtre passe-bas (166) pouvant être couplé activement à l'entrée de réglage d'amplification (12) de l'amplificateur (13),
le dispositif de réglage d'amplitude présentant, par ailleurs, un démodulateur d'amplitude de consigne (163) qui est couplé à une entrée sans inversion de l'amplificateur différentiel (165), et
le dispositif de réglage d'amplitude (16) présentant, par ailleurs, un démodulateur d'amplitude réelle (164) qui est couplé de manière active à une entrée à inversion de l'amplificateur différentiel (165).

6. Etage émetteur selon l'une des revendications précédentes,
dans lequel le dispositif de régulation de phase (17) présente un détecteur de phase/fréquence (173) et un filtre passe-bas de phase (174) connecté en aval, un signal de sortie du filtre passe-bas de phase étant couplé activement à l'entrée de réglage (15) de l'oscillateur réglable (14), et
le dispositif de régulation de phase (17) présentant, par ailleurs, un détecteur de phase de consigne (171) qui est couplé à une première entrée du détecteur de phase/fréquence (173), et
le dispositif de régulation de phase (17) présentant, par ailleurs, un détecteur de phase réelle (172) qui est couplé activement à une deuxième entrée du détecteur de phase/fréquence (173).

7. Etage émetteur selon la revendication 6,
dans lequel le détecteur de phase réelle (172) présente une plage de dynamique d'entrée prédéterminée, la plage prédéterminée du signal qui peut être générée, dans le sens de la circulation du signal, derrière l'amplificateur de trajet de couplage rétroactif (19b) étant inférieure ou égale à la plage de dynamique d'entrée prédéterminée du détecteur de phase réelle (172).

8. Etage émetteur selon la revendication 7, dans lequel le détecteur de phase réelle présente un circuit limiteur.

9. Etage émetteur selon l'une des revendications précédentes,
dans lequel le signal de consigne à émettre (20) a une première fréquence porteuse f₁ et le signal a, à la sortie de signal (11) de l'amplificateur (13), une deuxième fréquence porteuse f₂, dans le trajet de couplage rétroactif (19b) étant, par ailleurs, prévu un dispositif de conversion (19c) destiné à convertir la deuxième fréquence porteuse à la première fréquence porteuse.

10. Etage émetteur selon la revendication 9, dans lequel le dispositif de conversion de fréquence est prévu, dans le sens de la circulation du signal, après l'amplificateur de trajet de couplage rétroactif variable (19b).

11. Etage émetteur selon l'une des revendications précédentes, dans lequel le signal à émettre est, à l'entrée de signal (21), modulé en amplitude et modulé en phase (211, 212) selon une norme GSM EDGE ou selon une norme UMTS.

12. Etage émetteur selon l'une des revendications précédentes,
dans lequel le dispositif de réglage (22) présente un dispositif de réglage dans lequel sont prévues, comme grandeur d'entrée, une variation de puissance et, comme grandeur de sortie, une valeur d'amplification à générer pour l'amplificateur de trajet de couplage rétroactif (19b) et une valeur d'amplification pour un dispositif d'amplification (161, 162) dans le dispositif de réglage d'amplitude (16) pour faire varier le signal de réglage d'amplification.

13. Etage émetteur selon l'une des revendications précédentes, dans lequel le dispositif de réglage (22) est réalisé de manière à recevoir la demande (22) de variation d'un dispositif de détermination d'intensité de champ d'un appareil émetteur/récepteur radio cellulaire.

14. Etage émetteur selon la revendication 5, dans lequel l'amplificateur différentiel (165) présente une amplification réglable GS4 qui est choisie de sorte que soit remplie une spécification de canal voisin d'une spécification radio valable pour l'étage émetteur, l'amplification réglable GS4 étant maintenue, pendant le fonctionnement de l'étage émetteur, à une valeur fixe.

15. Etage émetteur selon l'une des revendications précédentes, dans lequel les fréquences limites du dispositif de réglage d'amplitude et du dispositif de régulation de phase sont dimensionnées de sorte qu'il ne se produise pas de perte d'information par le dispositif de réglage d'amplitude et le dispositif de régulation de phase.

16. Etage émetteur selon l'une des revendications précédentes,
dans lequel le dispositif de réglage (22) est réalisé de manière à activer l'amplificateur de trajet de couplage rétroactif variable (19b) de sorte que la plage prédéterminée soit inférieure à une plage de dynamique pouvant être générée par une demande (23) de variation maximale du niveau de puissance moyen du signal à la sortie (11) de l'amplificateur de puissance (13).

17. Etage émetteur selon l'une des revendications précédentes,
dans lequel la plage prédéterminée comprend une déviation d'une valeur nominale de l'amplitude du signal, dans le sens de la circulation du signal, après l'amplificateur de trajet de couplage rétroactif (19b) dans une largeur de bande de variation de +/- 10 % pour toutes les variations de niveau de puissance.

18. Procédé pour fournir un signal d'entrée à une entrée de signal (10) d'un amplificateur (13) qui présente, par ailleurs, une entrée de réglage d'amplification (12) et une sortie de signal (11), aux étapes suivantes consistant à :
obtenir un signal de consigne à émettre (20) par l'intermédiaire d'une entrée de signal (21) ;
générer un signal de réglage de fréquence d'une entrée de réglage de fréquence (15) d'un oscillateur réglable (14) par un dispositif de régulation de phase (17), l'oscillateur réglable présentant, par ailleurs, une sortie d'oscillateur, la sortie d'oscillateur pouvant être couplée de manière active à l'entrée de signal (10) de l'amplificateur (13) ;
coupler le dispositif de régulation de phase (17) à un trajet de couplage rétroactif (19) avec un amplificateur de trajet de couplage rétroactif (19b) à amplification variable (GS1), pour obtenir un signal réel (18), et coupler le dispositif de régulation de phase (17) à l'entrée de signal (21), pour obtenir le signal de consigne ;
générer un signal de réglage d'amplification de l'entrée de réglage d'amplification (12) de l'amplificateur (13) avec un dispositif de réglage d'amplitude (16) ; et
régler un niveau de puissance moyen d'un signal à la sortie de signal (11) de l'amplificateur avec un dispositif de réglage (22), par l'étape suivante consistant à:
en fonction d'une demande (23) de modification du niveau de puissance moyen, activer le dispositif de réglage d'amplitude (16) pour générer, à l'aide du signal réel (18) et/ou du signal de consigne (20) (25), un signal de réglage d'amplification modifié et, simultanément, faire varier (24) une amplification (GS1) de l'amplificateur de trajet de couplage rétroactif (19b) de sorte qu'une amplitude d'un signal dans le trajet de couplage rétroactif (19), dans le sens de la circulation du signal, derrière l'amplificateur de trajet de couplage rétroactif (19b) qui est égal au signal réel (18), ou qui peut être dérivé du signal réel (19c), reste dans une plage prédéterminée, et l'étape d'activation présentant les étapes suivantes consistant à :
en cas de demande (23) d'un niveau de puissance moyen supérieur, réduire l'amplification (GS1) de l'amplificateur de trajet de couplage rétroactif (19b) et activer le dispositif de réglage d'amplitude (16) de sorte que le signal de réglage d'amplification entraîne une augmentation de l'amplification de l'amplificateur (13), et
en cas de demande (23) d'un niveau de puissance moyen inférieur, augmenter l'amplification (GS1) de l'amplificateur de trajet de couplage rétroactif (19b) et
activer le dispositif de réglage d'amplitude (16) de sorte que le signal de réglage d'amplification entraîne une diminution de l'amplification de l'amplificateur (13).
